Europäisches Patentamt

European Patent Office

Office européen des brevets

(19)

(11) EP 0 899 934 A1

(12) **DEMANDE DE BREVET EUROPEEN**

(43) Date de publication:
03.03.1999 Bulletin 1999/09

(51) Int. Cl.⁶: H04M 19/08

(21) Numéro de dépôt: 98202831.8

(22) Date de dépôt: 24.08.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 27.08.1997 FR 9710691

(71) Demandeur:
Koninklijke Philips Electronics N.V.
5621 BA Eindhoven (NL)

(72) Inventeur: Courtois, Fernand
75008 Paris (FR)

(74) Mandataire: Caron, Jean
Société Civile S.P.I.D.
156, Boulevard Haussmann
75008 Paris (FR)

(54) **Circuit adaptateur de tension d'alimentation**

(57) La présente invention concerne un circuit adaptateur PSA, destiné à fournir à une charge une tension de sortie VDD ayant une valeur régulée, comprenant :

. un module de comparaison OA, et
. un module de régulation RM pour ajuster la valeur de la tension de sortie VDD à une valeur de régulation nominale prédéterminée VregO.

L'invention permet d'inhiber le module de régulation RM lorsque la sortie du circuit adaptateur PSA est connectée à une source d'alimentation externe qui impose à ladite sortie une tension Vext dont la valeur est supérieure à la valeur de régulation nominale VregO.

Applications : alimentation des circuits électroniques d'un appareil téléphonique depuis différentes sources d'énergie.

FIG. 1

## Description

La présente invention concerne un circuit adaptateur de tension d'alimentation, destiné à être connecté entre une borne d'alimentation d'énergie, dite borne de ligne, et une borne de référence de potentiel, muni d'une borne de sortie destinée à fournir à une charge, lorsqu'elle est connectée entre la borne de sortie et la borne de référence de potentiel, une tension de sortie ayant une valeur dite de régulation, circuit comprenant :

- un module de comparaison muni d'une première et d'une deuxième entrée, respectivement destinées à recevoir une tension représentative de la tension de sortie et une tension ayant une valeur prédéterminée, et d'une sortie destinée à délivrer un signal représentatif du résultat de la comparaison entre lesdites tensions, et
- un module de régulation muni d'une entrée reliée à la sortie du module de comparaison, et destiné à ajuster la valeur de la tension de sortie à une valeur de régulation nominale prédéterminée.

Un tel circuit est souvent utilisé pour générer une tension régulée afin d'alimenter d'autres composants électroniques, qui constituent alors la charge du circuit adaptateur, au sein d'un appareil téléphonique. L'énergie utilisée pour générer la tension régulée provient dans ce cas d'une ligne téléphonique à laquelle est connecté l'appareil. Il est de plus en plus courant que l'appareil téléphonique proprement dit soit associé à un appareil annexe, appelé périphérique, comme par exemple un répondeur ou encore un télécopieur. Un tel périphérique reçoit en principe l'énergie qui lui est nécessaire depuis une alimentation de type secteur et peut donc constituer pour l'appareil téléphonique une source d'alimentation plus performante que la ligne téléphonique. Il est donc souhaitable de prévoir la possibilité d'un raccordement de la source d'alimentation externe fournie par le périphérique à la charge alimentée par le circuit adaptateur d'alimentation. Si la source d'alimentation externe fournit une tension de sortie à un potentiel plus élevé que la valeur de régulation du module de régulation, ce dernier va tenter d'abaisser ce potentiel, sans toutefois y parvenir car c'est alors la source d'alimentation externe qui impose le potentiel de la borne de sortie du circuit. Ces tentatives provoqueront, au mieux, un gaspillage d'énergie considérable, et au pire, un écroulement de la source d'alimentation externe du fait de la très grande consommation d'énergie que fera le module de régulation à ces vaines fins correctrices.

La présente invention a pour but de remédier à ces inconvénients en proposant un circuit adaptateur de tension d'alimentation dont le module de régulation se trouve inhibé lorsque la sortie du circuit est connectée à une source d'alimentation externe qui impose à ladite sortie une tension dont la valeur est supérieure à la valeur de régulation nominale.

En effet, un circuit adaptateur d'alimentation conforme au paragraphe introductif est caractérisé, selon l'invention, en ce qu'il est muni de moyens pour ajuster la valeur de régulation à la valeur d'une tension délivrée par une source de tension extérieure au circuit adaptateur lorsque ladite source de tension est connectée à la charge.

Dans un tel circuit adaptateur, tout se passe comme si la valeur de la tension délivrée par la source de tension extérieure devenait la valeur de régulation nominale. Le module de régulation ne tentera donc plus de modifier la valeur de la tension de sortie, mais aura au contraire tendance à la maintenir à cette nouvelle valeur de régulation nominale, conférant ainsi une plus grande stabilité à l'association du circuit adaptateur avec la source de tension extérieure.

Dans un de ses modes de réalisation possibles, un circuit adaptateur selon l'invention se caractérise en ce que le module de régulation comprend une capacité connectée entre la borne de ligne et la borne de référence de potentiel, et un transistor muni d'une borne de polarisation reliée à la sortie du module de comparaison, d'une borne de référence, et d'une borne de transfert, transistor dont le trajet de courant principal, défini comme étant la jonction entre la borne de transfert et la borne de référence, est connecté en parallèle avec ladite capacité.

Ce mode de réalisation du module de régulation, avantageux par sa simplicité, autorise une stabilisation de la tension de sortie grâce à l'effet mémoire dû à la capacité. Lorsque la valeur de la tension de sortie, c'est-à-dire la tension présente aux bornes de la capacité, dépasse la valeur de régulation nominale, ce dépassement est détecté par le module de comparaison dont la sortie commande la mise en conduction du transistor du module de régulation. Ceci provoque une décharge partielle de la capacité au travers du trajet de courant principal du transistor. Lorsque la valeur de la tension de sortie descend en-dessous de la valeur de régulation nominale, la sortie du module de comparaison bascule à nouveau et interrompt la conduction du transistor. La capacité peut donc recommencer à se charger, puisqu'elle est reliée à la borne de ligne, jusqu'au prochain dépassement, qui provoquera la reproduction du cycle décrit ci-dessus.

Dans un mode de réalisation particulier de l'invention, un circuit adaptateur de tension d'alimentation se caractérise en ce qu'il comprend en outre un module de mesure, destiné à délivrer sur une sortie un signal représentatif de la valeur d'un courant dit de sortie qui traverse la borne de sortie du circuit, et un pont diviseur de tension constitué d'au moins une première et une deuxième résistance connectées en série entre la borne de ligne et la borne de référence de potentiel, et présentant entre elles un noeud intermédiaire relié à la première entrée du module de comparaison, et en ce que le module de régulation est muni de moyens d'injection, activés par la sortie du module de mesure lorsque le courant de sortie circule depuis l'extérieur vers l'intérieur du circuit, pour injecter un courant dans celle des résistances du pont diviseur qui sépare la borne de ligne de la première entrée du module de comparaison.

Dans un tel circuit adaptateur, le module de mesure détecte la présence d'une source de tension extérieure connectée à la charge et débitant une tension ayant une valeur supérieure à la valeur de régulation nominale, lorsque le courant de sortie circule depuis l'extérieur vers l'intérieur du circuit. Les moyens d'injection sont alors mis en action. Ceux-ci vont réaliser une correction de la valeur de régulation nominale. L'injection de courant dans celle des résistances du pont diviseur qui sépare la borne de ligne de la première entrée du module de comparaison, en l'occurence la première résistance, a pour effet d'augmenter la valeur de la chute de tension aux bornes de ladite première résistance, et donc de diminuer la valeur de la tension reçue par le module de comparaison sur sa première entrée. Il faudra ainsi une tension de sortie plus importante pour faire basculer la sortie du module de comparaison et mettre en action les moyens de régulation. La structure décrite ci-dessus assure automatiquement que la valeur de la chute de tension totale aux bornes de la première résistance est telle que la somme de cette valeur et de la tension prédéterminée soit égale à la valeur de la tension délivrée par la source de tension extérieure, ce qui équivaut à configurer le circuit adaptateur de sorte que la valeur de régulation nominale devienne égale à la valeur de la tension délivrée par la source de tension extérieure. En effet, tant que la correction réalisée grâce aux moyens d'injection n'est pas d'ampleur suffisante, le courant de sortie continue de circuler de l'extérieur vers l'intérieur du circuit adaptateur. Les moyens d'injection reçoivent donc depuis le module de mesure un signal leur commandant d'opérer une injection de courant plus importante, et donc une correction d'ampleur plus importante, jusqu'à ce qu'un équilibre soit atteint, c'est-à-dire jusqu'à l'égalité entre la nouvelle valeur de régulation nominale et la valeur de la tension délivrée par la source de tension extérieure, équilibre qui se traduit en théorie par une annulation de la valeur du courant de sortie. En pratique, on assistera plutôt à un dépassement, c'est-à-dire un changement de sens du courant de sortie, dû à une correction de trop grande ampleur, dépassement à la suite duquel la valeur du courant injecté va diminuer jusqu'à ce que le courant de sortie change à nouveau de sens, et ainsi de suite.

Dans un mode de réalisation particulièrement avantageux de l'invention, un circuit adaptateur de tension d'alimentation tel que décrit ci-dessus se caractérise en ce que les moyens d'injection comprennent un transistor dont l'entrée de polarisation est reliée à la sortie du module de mesure et dont le trajet de courant principal est connecté entre la première entrée du module de comparaison et la borne de référence de potentiel.

Dans un tel circuit adaptateur, les moyens d'injection prennent une forme particulièrement aisée à réaliser, puisqu'ils consistent en un unique transistor. Celui-ci reçoit sur son entrée de polarisation un signal délivré par le module de mesure, signal qui est représentatif de la valeur du courant de sortie. La valeur du courant qui parcourt le trajet de courant principal du transistor, qui constitue le courant injecté et représente donc l'ampleur de la correction apportée, est proportionnel à la valeur du signal de sortie du circuit de mesure, et donc à l'ampleur de la correction recherchée.

Ainsi qu'exposé précédemment, un circuit adaptateur de tension d'alimentation conforme à l'invention sera avantageusement mis en oeuvre au sein d'un appareil téléphonique. L'invention concerne donc également un appareil téléphonique comportant :

. un pont redresseur muni de deux bornes, dites alternatives, destinées à être reliées à une ligne téléphonique, d'une première et d'une deuxième bornes, dites continues, destinées respectivement à délivrer et à recevoir un courant redressé appelé courant de ligne,

. un module d'interface connecté entre les bornes continues et notamment destiné à effectuer un traitement d'informations véhiculées par le courant de ligne, et

. un micro-contrôleur destiné à recevoir et à gérer des commandes données par un utilisateur de l'appareil, muni d'une borne positive d'alimentation et d'une borne de référence de potentiel, laquelle est reliée à l'une des bornes continues du pont redresseur,

caractérisé en ce qu'il comporte en outre :

. un circuit adaptateur d'alimentation tel que décrit plus haut, connecté entre les bornes continues du pont redresseur, et dont la borne de sortie est reliée à la borne positive d'alimentation du micro-contrôleur.

Grâce à l'invention, un tel appareil téléphonique peut, lorsqu'il est associé à un appareil périphérique, utiliser une tension d'alimentation fournie par ce dernier pour l'alimentation de certains de ses composants électroniques internes, comme par exemple le micro-contrôleur.

L'invention sera mieux comprise à l'aide de la description suivante, faite à titre d'exemple non-limitatif et en regard des dessins annexés, dans lesquels :

- la figure 1 présente un schéma électrique d'un circuit adaptateur de tension d'alimentation selon l'invention, et

- la figure 2 présente un diagramme fonctionnel d'un circuit appareil téléphonique mettant en oeuvre un circuit adaptateur selon l'invention.

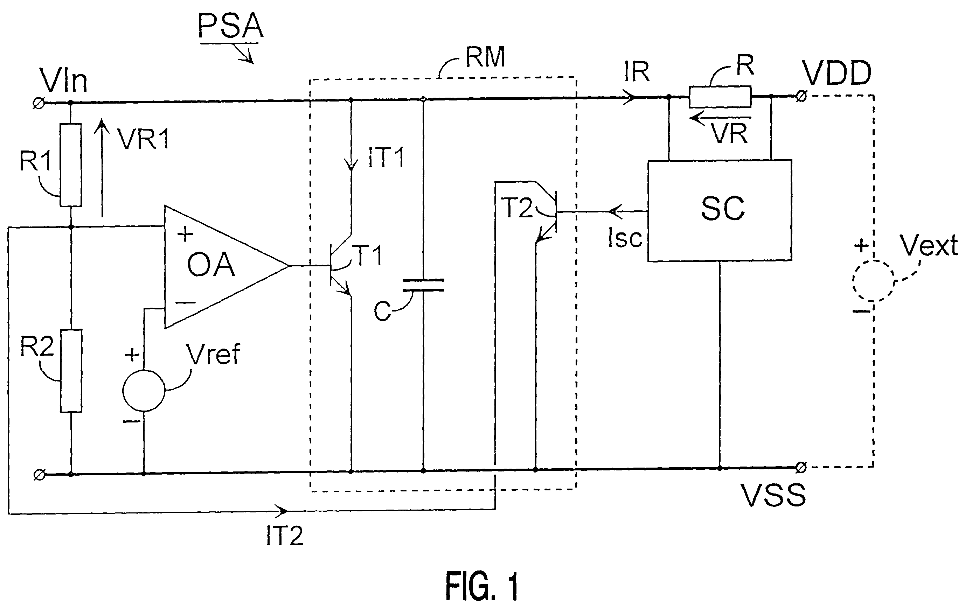

La figure 1 décrit partiellement un circuit adaptateur de tension d'alimentation PSA selon l'invention. Ce circuit adaptateur PSA est destiné à être connecté entre une borne d'alimentation d'énergie, dite borne de ligne, ayant un potentiel Vln, et une borne de référence de potentiel VSS. Il est muni d'une borne de sortie destinée à fournir à une charge, lorsqu'elle est connectée entre la borne de sortie et la borne de référence de potentiel VSS, une tension de sortie VDD ayant une valeur dite de régulation. Ce circuit comprend :

. un module de comparaison OA, constitué ici par un amplificateur opérationnel comparateur, muni d'une première et d'une deuxième entrée, respectivement destinées à recevoir une tension représentative de la tension de sortie VDD et une tension Vref ayant une valeur prédéterminée, et d'une sortie destinée à délivrer un signal représentatif du résultat de la comparaison entre lesdites tensions, et

. un module de régulation RM muni d'une entrée reliée à la sortie du module de comparaison OA, et destiné à ajuster la valeur de la tension de sortie VDD à une valeur de régulation nominale prédéterminée VregO.

Le module de régulation RM comprend une capacité C connectée entre la borne de ligne et la borne de référence de potentiel VSS, et un transistor T1. Ce transistor T1 est de type bipolaire NPN dans cet exemple, et présente un collecteur constituant une borne de transfert, un émetteur constituant une borne de référence et une base constituant une borne de polarisation, laquelle est reliée à la sortie du module de comparaison OA. Le trajet de courant principal de ce transistor T1, défini comme étant la jonction entre son collecteur et son émetteur, est connecté en parallèle avec la capacité C. Le circuit adaptateur de tension PSA comprend en outre un module de mesure (R, SC), destiné à délivrer sur une sortie un signal représentatif de la valeur d'un courant dit de sortie IR qui traverse la borne de sortie du circuit adaptateur PSA, et un pont diviseur de tension constitué d'une première et d'une deuxième résistance R1 et R2, disposées en série entre la borne de ligne et la borne de référence de potentiel VSS, présentant ainsi entre elles un noeud intermédiaire relié à la première entrée du module de comparaison OA. Le module de régulation RM est muni de moyens d'injection, activés par la sortie du module de mesure (R, SC) lorsque le courant de sortie IR circule depuis l'extérieur vers l'intérieur du circuit adaptateur PSA, c'est-à-dire dans un sens négatif, opposé à celui représenté sur la figure, pour injecter un courant IT2 dans la première résistance R1. Ces moyens d'injection sont constitués par un transistor T2, également de type bipolaire NPN dans cet exemple, dont la base est reliée à la sortie du module de mesure (R, SC) et dont le trajet de courant principal est connecté entre la première entrée du module de comparaison OA et la borne de référence de potentiel VSS.

Le fonctionnement de ce circuit adaptateur de tension PSA est le suivant : en l'absence de toute source de tension extérieure, une stabilisation de la tension de sortie VDD est réalisée grâce à l'effet mémoire dû à la capacité C. Lorsque la valeur de la tension de sortie VDD, c'est-à-dire la tension présente aux bornes de la capacité C, en négligeant une éventuelle chute de tension aux bornes du module de mesure (R, SC), dépasse la valeur de régulation nominale VregO égale à $(R1+R2).Vref/R2$, ce dépassement est détecté par le module de comparaison OA dont la sortie commande la mise en conduction du transistor T1 du module de régulation. Ceci provoque une décharge partielle de la capacité C au travers du trajet de courant principal du transistor T1, qui se traduit par un courant collecteur-émetteur IT1. Lorsque la valeur de la tension de sortie VDD descend en-dessous de la valeur de régulation nominale VregO, la sortie du module de comparaison OA bascule à nouveau et interrompt la conduction du transistor T1. La capacité C peut donc recommencer à se charger, puisqu'elle est reliée à la borne de ligne, jusqu'au prochain dépassement, qui provoquera la reproduction du cycle décrit ci-dessus.

Lorsqu'une source de tension extérieure débitant une tension Vext supérieure à la tension de régulation nominale VregO, représentée ici en pointillés, est connectée en parallèle avec la capacité C, le courant de sortie IR devient négatif. Ce changement de sens est détecté par le module de mesure (R, SC), qui comprend une résistance R, dont la fonction est de générer une tension VR négligeable devant VregO et proportionnelle au courant de sortie IR, et un circuit SC de mesure et d'analyse de l'évolution dans le temps de ladite tension VR. Les moyens d'injection, constitués ici par le transistor T2, sont alors mis en action. Le transistor T2 va réaliser une correction de la valeur de régulation nominale VregO. L'injection d'un courant IT2 dans la première résistance R1 a pour effet d'augmenter la valeur de la chute de tension VR1 aux bornes de ladite première résistance R1, et donc de diminuer la valeur de la tension reçue par le module de comparaison OA sur sa première entrée. Il faudra ainsi une tension de sortie VDD plus importante pour faire basculer la sortie du module de comparaison et mettre en action le module de régulation RM. Cette structure assure automatiquement que la valeur de la chute de tension totale VR1 aux bornes de la première résistance R1 est telle que $Vref+VR1=Vext$, en négligeant la chute de tension VR aux bornes du module de mesure (R, SC), ce qui équivaut à configurer le circuit adaptateur PSA de sorte qu'il possède une nouvelle valeur nominale de régulation égale à la valeur de la tension Vext délivrée par la source de tension extérieure. En effet, tant que la correction réalisée par la chute de tension additionnelle R1.IT2 apportée grâce au transistor T2 n'est pas d'ampleur suffisante, le courant de sortie IR reste négatif. La base du transistor T2 reçoit donc depuis le module de mesure (R, SC) un courant Isc plus important, qui commande ainsi la conduction d'un courant collecteur-émetteur IT2 plus important, et donc une correction d'ampleur plus importante, jusqu'à ce qu'un équilibre soit atteint, c'est-à-dire jusqu'à l'égalité entre la nouvelle valeur de régulation et la valeur de la tension Vext délivrée par la source de tension extérieure, ce qui se traduit en théorie par une annulation de la valeur du courant de sortie (IR=O). En pratique, on assistera plutôt à un dépassement, c'est-à-dire que le courant de sortie IR va devenir positif, du fait d'une correction de trop grande ampleur, dépassement à la suite duquel la valeur du courant IT2 injecté va diminuer jusqu'à ce que le courant de sortie IR change à nouveau de sens, et ainsi de suite. Il est à noter que si la valeur de la tension Vext délivrée par la source de tension extérieure est inférieure à la valeur de régulation nominale VregO, le courant de sortie IR reste positif et les moyens d'injection ne sont pas mis en action. C'est donc systématiquement celle des tensions disponibles, VregO ou Vext, qui a la plus grande valeur qui constituera la tension de sortie VDD. Le circuit adaptateur de tension d'alimentation PSA réalise ainsi une exploitation optimale des ressources énergétiques disponibles.

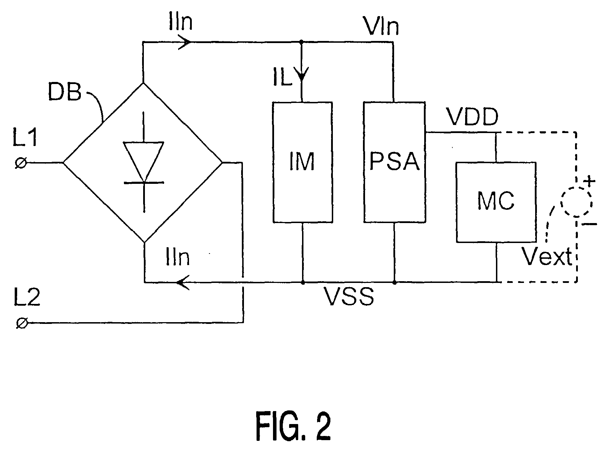

La figure 2 représente schématiquement un appareil téléphonique comportant :

.   un pont redresseur DB muni de deux bornes L1 et L2, dites alternatives, destinées à être reliées à une ligne téléphonique, d'une première et d'une deuxième bornes, dites continues, destinées respectivement à délivrer et à recevoir un courant redressé IIn appelé courant de ligne,
.   un module d'interface IM connecté entre les bornes continues et notamment destiné à effectuer un traitement d'informations véhiculées par le courant de ligne, et
.   un micro-contrôleur MC destiné à recevoir et à gérer des commandes données par un utilisateur de l'appareil, muni d'une borne positive d'alimentation et d'une borne de référence de potentiel VSS, laquelle est reliée à l'une des bornes continues du pont redresseur DB.

Cet appareil téléphonique comporte en outre un circuit adaptateur d'alimentation PSA tel que décrit précédemment, connecté entre les bornes continues du pont redresseur DB, et dont la borne de sortie est reliée à la borne positive d'alimentation du micro-contrôleur MC.

Grâce au circuit adaptateur de tension d'alimentation PSA, un tel appareil téléphonique peut, lorsqu'il est associé à un appareil périphérique, utiliser une tension d'alimentation Vext fournie par ce dernier pour l'alimentation de certains de ses composants électroniques internes, comme par exemple le micro-contrôleur MC.

## Revendications

1.  Circuit adaptateur de tension d'alimentation, destiné à être connecté entre une borne d'alimentation d'énergie, dite borne de ligne, et une borne de référence de potentiel, muni d'une borne de sortie destinée à fournir à une charge, lorsqu'elle est connectée entre la borne de sortie et la borne de référence de potentiel, une tension de sortie ayant une valeur dite de régulation, circuit comprenant :

    .   un module de comparaison muni d'une première et d'une deuxième entrée, respectivement destinées à recevoir une tension représentative de la tension de sortie et une tension ayant une valeur prédéterminée, et d'une sortie destinée à délivrer un signal représentatif du résultat de la comparaison entre lesdites tensions, et
    .   un module de régulation muni d'une entrée reliée à la sortie du module de comparaison, et destiné à ajuster la valeur de la tension de sortie à une valeur de régulation nominale prédéterminée,
    circuit caractérisé en ce qu'il est muni de moyens pour ajuster la valeur de régulation à la valeur d'une tension délivrée par une source de tension extérieure au circuit adaptateur lorsque ladite source de tension est connectée à la charge.

2.  Circuit adaptateur de tension d'alimentation selon la revendication 1, caractérisé en ce que le module de régulation comprend une capacité connectée entre la borne de ligne et la borne de référence de potentiel, et un transistor muni d'une borne de polarisation reliée à la sortie du module de comparaison, d'une borne dite de référence, et d'une borne dite de transfert, transistor dont le trajet de courant principal, défini comme étant la jonction entre la borne de transfert et la borne de référence, est connecté en parallèle avec ladite capacité.

3.  Circuit adaptateur de tension d'alimentation selon l'une des revendications 1 ou 2, caractérisé en ce qu'il comprend en outre un module de mesure, destiné à délivrer sur une sortie un signal représentatif de la valeur d'un courant dit de sortie qui traverse la borne de sortie du circuit, et un pont diviseur de tension constitué d'au moins une première et une deuxième résistance connectées en série entre la borne de ligne et la borne de référence de potentiel, et présentant entre elles un noeud intermédiaire relié à la première entrée du module de comparaison, et en ce que le module de régulation est muni de moyens d'injection, activés par la sortie du module de mesure lorsque le courant de sortie circule depuis l'extérieur vers l'intérieur du circuit, pour injecter un courant dans celle des résistances du pont diviseur qui sépare la borne de ligne de la première entrée du module de comparaison.

4. Circuit adaptateur de tension d'alimentation selon la revendication 3, caractérisé en ce que les moyens d'injection comprennent un transistor dont l'entrée de polarisation est reliée à la sortie du module de mesure et dont le trajet de courant principal est connecté entre la première entrée du module de comparaison et la borne de référence de potentiel.

5. Appareil téléphonique comportant :

. un pont redresseur muni de deux bornes, dites alternatives, destinées à être reliées à une ligne téléphonique, d'une première et d'une deuxième bornes, dites continues, destinées respectivement à délivrer et à recevoir un courant redressé appelé courant de ligne,

. un module d'interface connecté entre les bornes continues et notamment destiné à effectuer un traitement d'informations véhiculées par le courant de ligne, et

. un micro-contrôleur destiné à recevoir et à gérer des commandes données par un utilisateur de l'appareil, muni d'une borne positive d'alimentation et d'une borne de référence de potentiel, laquelle est reliée à l'une des bornes continues du pont redresseur,

caractérisé en ce qu'il comporte en outre :

. un circuit adaptateur d'alimentation conforme à l'une quelconque des revendications 1 à 4, connecté entre les bornes continues du pont redresseur, et dont la borne de sortie est reliée à la borne positive d'alimentation du micro-contrôleur.

FIG. 1

EP 0 899 934 A1

FIG. 2

EP 0 899 934 A1

## Office européen des brevets

**RAPPORT DE RECHERCHE EUROPEENNE**

Numéro de la demande

EP 98 20 2831

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 813 072 A (MOSES ET AL.) 14 mars 1989 <br> * le document en entier * <br> --- | 1-5 | H04M19/08 |
| A | US 4 961 222 A (JOHANSSON ET AL.) <br> 2 octobre 1990 <br> * le document en entier * <br> --- | 1-5 | |
| A | GB 2 296 581 A (MOTOROLA INC) <br> 3 juillet 1996 <br> * page 1, ligne 4 - page 2, ligne 19 * <br> --- | 1-5 | |
| A | FR 2 538 661 A (THOMSON CSF) 29 juin 1984 <br> * le document en entier * <br> --- | 1-5 | |
| A | DE 33 47 765 A (TELEFONBAU UND NORMALZEIT) <br> 31 octobre 1984 <br> * le document en entier * <br> ----- | 1-5 | |

**DOMAINES TECHNIQUES RECHERCHES (Int.Cl.6)**

H04M
G05F

Le présent rapport a été établi pour toutes les revendications

| Lieu de la recherche | Date d'achèvement de la recherche | Examinateur |
|---|---|---|
| LA HAYE | 9 octobre 1998 | Schobert, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

9